Europäisches Patentamt

European Patent Office

Office européen des brevets

(19)

(11) Veröffentlichungsnummer : **0 465 775 B1**

(12) # EUROPÄISCHE PATENTSCHRIFT

(45) Veröffentlichungstag der Patentschrift :
**25.10.95 Patentblatt 95/43**

(51) Int. Cl.$^6$ : **G06K 7/10,** B07C 5/34,
B07C 5/342

(21) Anmeldenummer : **91106431.9**

(22) Anmeldetag : **22.04.91**

(54) **Codeleseverfahren.**

(30) Priorität : **13.07.90 CH 2339/90**

(43) Veröffentlichungstag der Anmeldung :
**15.01.92 Patentblatt 92/03**

(45) Bekanntmachung des Hinweises auf die
Patenterteilung :
**25.10.95 Patentblatt 95/43**

(84) Benannte Vertragsstaaten :
**AT BE CH DE DK ES FR GB GR IT LI LU NL SE**

(56) Entgegenhaltungen :
**EP-A- 0 155 789**
**DE-A- 2 429 160**
**DE-A- 2 943 811**
**DE-A- 3 611 536**
**DE-A- 3 637 210**
**DE-A- 3 837 657**
**GB-A- 2 071 892**

(73) Patentinhaber : **ELPATRONIC AG**
**Hertizentrum 6**
**CH-6303 Zug (CH)**

(72) Erfinder : **Apter, Robert**
**Riedhofstrasse 295**
**CH-8048 Zürich (CH)**
Erfinder : **Schwartz, Nira**
**2800 Plaza del Amo**
**Torrance, CA 90503 (CH)**
Erfinder : **Plester, George**
**Rheinstrasse 79**
**W-4300 Essen 18 (DE)**
Erfinder : **Scholl, Hans-Willy**
**Nierfeldweg 20**
**W-4200 Oberhausen (DE)**

## Beschreibung

Die Erfindung betrifft ein verfahren zum Lesen einer auf einer lichtdurchlässigen Flasche od.dgl. im unteren Bereich derselben ringförmig angeordneten Kette von Codezeichen durch Richten einer Kamera durch den Flaschenhals hindurch auf den unteren Flaschenbereich, Beleuchten des unteren Flaschenbereiches von aussen und Speichern und Decodieren der mit der Kamera aufgenommenen Codezeichenkette.

Das deutsche Patent Nr. 38 29 025 der Anmelderin beschreibt ein Verfahren zum Aufbringen von optisch lesbaren Codezeichen auf die Oberfläche von Behältern, vorzugsweise Kunststofflaschen, durch Herstellen von Vertiefungen in der Oberfläche mittels eines Lasers derart, dass der Grund jedes Codezeichens als diffus streuender Reflektor ausgebildet ist. Bei den Kunststofflaschen handelt es sich vorzugsweise um Mehrweg-PET-Flaschen, d.h. PET Flaschen, die vom Kunden zurückgegeben und dann wieder gefüllt werden, was etwa 25-mal pro Flasche erfolgen soll. Der Code, der gemäss diesem älteren deutschen Patent der Anmelderin mittels Laser aufgebracht wird, ersetzt z.B. den bekannten Saint-Gobain-Code aus erhabenen oder vertieften Punkten, mittels welchem üblicherweise die Blasformnummer auf der Flaschenoberfläche angegeben wird, erfordert zum Aufbringen weniger Zeitaufwand als der bekannte Code und kann wesentlich mehr Information aufnehmen. Ausserdem kann er sicherer gelesen werden.

Dieses Lesen erfolgt z.B. gemäss dem weiteren deutschen Patent Nr. 37 22 422 der Anmelderin automatisch mit einem Lesekopf. Dieser enthält einen optisch elektrischen Sensor, der mittels Lichtleitern ein von einer Lichtquelle ausgesandtes Lichtbündel auf die Oberfläche der Flasche wirft und ein durch ein Codezeichen reflektiertes Lichtbündel zurück zu einem photoelektrischen Empfänger überträgt. Für den Lesevorgang wird der Vorschub der Flasche unterbrochen, wenn diese sich gegenüber dem Sensor befindet, und die Flasche wird mehrmals um ihre Längsachse gedreht, so dass der Sensor die Kette von Codezeichen mehrmals seriell aufnehmen kann. Dieses Anhalten des Vorschubs und mehrmalige Drehen jeder Flasche gegenüber dem Sensor erfordert Zeit, die möglichst kurz sein sollte, da in Inspektionsmaschinen für wiederbefüllbare PET-Flaschen die angestrebte Inspektionsleistung 600 PET-Flaschen/Minute beträgt. Da weiter Mehrweg-Flaschen aus Kunststoff leichter verkratzen und weniger formstabil und alterungsbeständig als solche aus Glas sind, kann es passieren, dass bei jedem Wiederbefüllen der Mehrweg-PET-Flasche das Verfahren zum korrekten Lesen von deren Code mehr Schwierigkeiten bereitet, weil z.B. die Codezeichenkette ihre Lage geändert hat oder nur noch verschwommen oder unscharf wahrnehmbar ist. Darüber hinaus wird das bekannte Codeleseverfahren häufig dadurch erschwert, weil wiederzubefüllende Flaschen Etikettenreste oder ganze Etiketten aus der Waschanlage mit sich führen oder im Gebrauch aussen bereits so stark verkratzt worden sind und daher soviel Streulicht erzeugen, dass eine korrekte Codeablesung unmöglich ist.

Ein aus der DE-A-29 43 811 bekanntes Codeleseverfahren vermeidet die letztgenannten Probleme dadurch, dass zum Codelesen eine Kamera benutzt wird, die so angeordnet ist, dass sie durch den Hals einer jeden Flasche nach unten sieht und auf deren Boden fokussiert ist. Eine Rasterung auf dem Flaschenboden enthält einen Code, der die Nummer des Formhohlraums anzeigt, in welchem die Flasche hergestellt worden ist. Verwendet wird ein Code aus neun Zeichen, von denen zwei den Anfang bzw. das Ende des Codes anzeigen. Mittels einer Beleuchtungsquelle wird Licht von unten her durch einen Spalt hindurch auf den Flaschenboden projiziert. Zum Lesen des Codes der Flasche wird deren Vorschub unter der Kamera unterbrochen und dann die Flasche um ihre Längsachse gedreht. Die Codezeichen sind in zwei konzentrischen Rasterkreisen auf dem Flaschenboden vorgesehen. Jedes Codezeichen besteht aus zwei Bits, nämlich einem in dem äusseren Rasterkreis und einem in dem inneren Rasterkreis. Zum sicheren Lesen des Codes wird die Flasche während jedes Lesevorgangs viermal um ihre Längsachse gedreht. Die Kamera ist eine Zeilenabtastkamera, welche die sich an dem Spalt vorbeibewegenden Codezeichen in Form der Rastermarkierungen seriell aufnimmt. Dieses bekannte Leseverfahren wird zwar weniger durch äussere Einflüsse beeinträchtigt, da die Kamera die Codezeichen vom Inneren der Flasche her aufnimmt, es erfordert jedoch zeitlichen und apparativen Aufwand, und zwar wegen der Vorschubunterbrechung und mehrmaligen Drehung der Flasche bei jedem Lesevorgang bzw. wegen der zum Einspannen und Drehen der Flaschen erforderlichen Einrichtungen. Der benutzte Code ist aufwendig, weil die Codezeichenkette aus zwei konzentrischen Kreisringen besteht, die überdies nur an Flaschenboden vorgesehen werden können. Das dürfte kaum mehr als die Formhohlraumnummerinformation zu codieren gestatten und überdies auch allenfalls bei Flaschen aus Glas anwendbar sein. Bei diesem bekannten Verfahren lässt sich das Arbeiten mit Codezeichen in zwei Rasterkreisen aber nicht vermeiden, weil einerseits jedes Codezeichen aus zwei Bits besteht und sich andererseits Anfang und Ende einer Codezeichenkette sonst nicht markieren liessen.

Es ist zwar bereits aus der DE-A1-36 37 210 bekannt, eine Codezeichenkette aus zwei Rasterkreisen an der Flaschenwand oberhalb des Bodens vorzusehen, das Beleuchten und Lesen derselben erfolgt jedoch von aussen wie bei dem o.g. älteren deutschen Patent Nr. 37 22 422 der Anmelderin. Unterschiedlich ist lediglich, dass statt des Lichtsensors eine Kamera eingesetzt wird.

2

Aus der DE-A-24 29 160 ist zwar bereits ein Codeleseverfahren bekannt, bei dem die Codezeichenkette aus nur einem Kreisring besteht, der an dem Boden einer Flasche aus Glas oder Kunststoff vorgesehen ist, bei diesem bekannten Verfahren dürften jedoch im übrigen alle oben erwähnten Probleme auftreten. Das Licht einer Lampe wird bei diesem bekannten Verfahren von oben her durch den Flaschenhals auf den Flaschenboden gerichtet, und die Flasche braucht während des Lesevorganges nicht um ihre Längsachse gedreht zu werden. Ein Lichtdetektor ist unterhalb des Flaschenbodens vorgesehen und hat einen Lesekopf, der zum seriellen Aufnehmen der Codezeichen um die Flaschenlängsachse gedreht wird. Hier wird also mit der sogenannten Scannertechnik gearbeitet, bei der statt der Flasche ein Lesekopf umläuft. Der zeitliche Aufwand wird dadurch nicht geringer, allenfalls der apparative Aufwand, da es einfacher ist, einen Lesekopf stets in derselben Lage und Ausrichtung in Drehung zu versetzen als Flaschen, die nacheinander über ein und demselben Lesekopf in möglichst gleicher Ausrichtung und Lage eingespannt und gedreht werden müssen. Auch bei diesem bekannten Verfahren besteht jedes Codezeichen aus mehreren Bits. Damit der Anfang der Codezeichenkette ermittelt werden kann, ist eine besondere Zeichenkombination aus vier eng nebeneinander angeordneten Rastermarkierungen vorgesehen, bei der die Ablesung beginnen soll. Das Ablesen erfolgt vorzugsweise wiederum mehrmals, um die Lesegenauigkeit zu erhöhen. Immerhin ist bei diesem bekannten Verfahren die Verwendung eines selbstkorrigierenden Codes mit Paritätsmarkierungen vorgesehen.

Die DE-A-25 20 136 beschreibt ein Verfahren und eine Vorrichttung zur Identifikation einer Flasche, bei denen der verwendete Code dem bei dem vorstehend beschriebenen Verfahren verwendeten entspricht. Zur Beleuchtung der Codezeichenkette wird ein Laserstrahl benutzt, der durch den Flaschenhals auf den Flaschenboden gerichtet wird. Unter dem Flaschenboden ist ein Spiegel angeordnet, der den austretenden Laserstrahl auf einen Messfühler richtet. Für den Lesevorgang ist es erforderlich, entweder den Laserstrahl oder wiederum die Flasche in Rotation zu setzen, was mit den vorstehend geschilderten Problemen verbunden ist.

Schliesslich sind aus der US-A-3 745 314 eine Vorrichtung und ein Verfahren zum Identifizieren eines Flaschenformhohlraums bekannt, bei denen eine über der Flaschenmündung angeordnete und auf den Flaschenboden gerichtete Lampe und eine unterhalb des Flaschenbodens angeordnete Leseeinheit zwar stillstehen, zwischen der Leseeinheit und dem Flaschenboden ist jedoch ein drehbares Prisma vorgesehen, welches das Bild des Bodens der Flasche über eine Sammellinse auf die Leseeinheit richtet und auf dieser in Drehung versetzt. Die Codezeichenkette, die auf dem Flaschenboden vorgesehen ist, besteht hier wiederum aus zwei konzentrischen Kreisringen. Aufgrund der zwischen Lampe und Flasche einerseits und Leseeinheit andererseits erforderlichen Relativdrehbewegung, die hier durch das rotierende Prisma erzeugt wird, ergeben sich die gleichen Probleme wie bei den anderen bekannten Verfahren und Vorrichtungen, bei denen diese Relativdrehbewegung ebenfalls erforderlich ist. Zumindest hinsichtlich des Zeitaufwandes ist es unerheblich, dass hier statt der Flasche oder der Leseeinrichtung ein Prisma in Drehung versetzt wird, um das serielle Lesen der Codezeichen zu ermöglichen.

Aufgabe der Erfindung ist es, ein Codeleseverfahren der eingangs genannten Art so zu verbessern, dass der Code mit wesentlich weniger Zeitaufwand und bei höherem Informationsgehalt ohne Einbusse an Genauigkeit gelesen werden kann.

Diese Aufgabe ist ausgehend von einem Verfahren der eingangs genannten Art erfindungsgemäss dadurch gelöst, dass eine Momentaufnahme des unteren Flaschenbereiches mit der gesamten Codezeichenkette gemacht und zum späteren Decodieren derselben als ein Bild gespeichert wird.

Das erfindungsgemässe Verfahren verringert den Zeitaufwand zum Lesen eines Codes drastisch, weil der Code nicht seriell gelesen wird, sondern als Einzelbild mittels Momentaufnahme festgehalten wird. Für eine solche Momentaufnahme ist es allenfalls, wenn überhaupt, erforderlich, den Vorschub der Flasche unter der Kamera etwas zu verlangsamen, damit ein Bild des unteren Flaschenbereiches mit der gesamten Codezeichenkette auf einmal aufgenommen werden kann, wofür die Bildaufnahmezeit ausreichend ist. Das Decodieren der Information aus dem als Bild gespeicherten Code kann dann später erfolgen, wenn die Flasche die Codelesestation der Inspektionsmaschine längst verlassen hat. Der Vorteil, den das erfindungsgemässe Leseverfahren hinsichtlich des apparativen Aufwands erbringt, ist gravierend, weil es jegliche Dreheinrichtungen überflüssig macht. Das durch das erfindungsgemässe Verfahren als Momentaufnahme gemachte Einzelbild enthält nicht nur den Code, sondern wesentlich mehr Information, beispielsweise über Defekte im unteren Flaschenbereich, Schmutz- oder Papierrückstände usw. Diese zusätzliche Information kann neben der Decodierung gleich mit ausgewertet werden. Dieses Kombinieren des Codeleseverfahrens mit der übrigen Inspektion des unteren Bereiches der Flasche bringt insgesamt eine weitere Verringerung des Zeitaufwandes und des apparativen Aufwandes mit sich.

Vorteilhafte Ausgestaltungen der Erfindung bilden die Gegenstände der Unteransprüche.

Der in der Ausgestaltung der Erfindung nach Anspruch 2 vorgesehene Code, bei dem jedes Codezeichen aus einem einzelnen Bit besteht, macht das Codeleseverfahren nicht nur besonders einfach und sicher, sondern ermöglicht auch, einen besonders grossen Informationsgehalt in der Codezeichenkette unterzubringen.

Der Code ist auch unter schwierigen Bedingungen wie Nassbetrieb, bei dem Seifenlösungen als Transportschmiermittel verwendet werden, sicher lesbar.

Die in der Ausgestaltung der Erfindung nach Anspruch 3 zum Decodieren des Bildes der Codezeichenkette angewandte Histogrammtechnik macht die Auswertung des aufgenommenen Bildes besonders einfach und genau.

Die in der Ausgestaltung der Erfindung nach Anspruch 4 durchgeführten Schritte ermöglichen ein unproblematisches Decodieren des von der Codezeichenkette aufgenommenen Bildes, auch wenn der Mittelpunkt des Bodens der Flasche nicht mit dem Mittelpunkt des Kreises zusammenfallen sollte, auf dem sich der Code befindet, wenn das Bild verschwommen sein sollte oder wenn die Codezeichen wegen Alterung der Flasche ihre Schärfe verloren haben sollten. Aus der US-A-3 502 993 ist es an sich bekannt, einen Signalpegel und einen Hintergrundpegel gesondert zu erfassen und zu vergleichen. Das dient aber lediglich dem Zweck, Pegeländerungen, die keinen Bezug zur Signalinformation haben, zu kompensieren.

Die Ausgestaltung der Erfindung nach Anspruch 5 vermeidet einen zeitraubenden Algorithmus zum Lokalisieren des Start- und des Stopbits des Codes. Ausserdem bietet es die Möglichkeit, zum Ermitteln des Anfangs und des Endes der Codezeichenkette lediglich aus einem Bit bestehende Codezeichen zu verwenden, wodurch in der Codezeichenkette kein Platz vergeudet wird.

Insgesamt ermöglicht das Codeleseverfahren in der Ausgestaltung der Erfindung nach den Ansprüchen 3 bis 5 eine beträchtliche Verringerung sowohl des Software- als auch des Hardwareaufwands im Vergleich zu anderen Codeleseverfahren.

Der durch das Verfahren nach der Erfindung in deren Ausgestaltung nach Anspruch 6 gelesene Code ist ein binärer Balkencode, der durch den bekannten Hammingabstand gesichert ist. Die Möglichkeit der Codekorrektur, z.B. wie hier nach Hamming, ist ein besonders grosser Vorteil der Erfindung. Der Hammingabstand gibt die minimale Anzahl zu ihrem Wert unterschiedlicher Bits an, die bei der Gegenüberstellung aller Zeichen ihres Codes auftreten. Der Hammingabstand ist ein Mass für die Sicherheit gegen Uebertragungsfehler und dient zum Kontrollieren und Korrigieren der Lesesicherheit. Der bei der Erfindung bevorzugte Code könnte zwar 8, 16, 28, 32, usw. Bits enthalten, 16, 28 oder 32 Bits ist aber die gegenwärtig bevorzugte Bitzahl zum Darstellen der auf Mehrweg-PET-Flaschen erforderlichen Information. Der Code wird vom Flaschenhersteller im Rahmen der Flaschenherstellung auf die Flaschen aufgebracht.

Ein weiterer Vorteil des Codes in der Ausgestaltung der Erfindung nach Anspruch 6 ergibt sich in der Ausgestaltung der Erfindung nach Anspruch 7, denn er ermöglicht, die von den Herstellern von Mehrweg-PET-Flaschen üblicherweise verlangte Information wie Datum, Produktionslinie (also Hersteller) und Flaschentyp sowie weitere Angaben wie Flaschenfarbe, -grösse usw. auf der Flasche dauerhaft und lesesicher unterzubringen.

In der Ausgestaltung der Erfindung nach Anspruch 8 lässt sich der Code auch dann lesen, wenn er nicht am Flaschenboden, sondern in dem Bereich an der Aussenwand der Flasche, der sich zwischen dem Flaschenboden und der Höhe, wo der Flaschenumfang am grössten ist, befindet. Der eingangs dargelegte einschlägige Stand der Technik zeigt, dass es bislang üblich ist, einen Code, der in dem vorgenannten Bereich aufgebracht ist, durch das bekannte einfache Leseverfahren zu lesen, bei dem Licht von aussen auf den Code gerichtet wird und das zurück nach aussen reflektierte oder nichtreflektierte Licht zur Decodierung des Codes benutzt wird, was mit den eingangs geschilderten Problemen verbunden ist. Bei allen bekannten Verfahren, bei denen die Kamera durch die Flaschenmündung auf den Flaschenboden sieht oder das Licht auf den Flaschenboden gerichtet wird und sich die Kamera oder Leseeinheit ausserhalb der Flasche befindet, können nur Codes verwendet werden, die am Flaschenboden vorgesehen sind. Erst die Ausgestaltung der Erfindung nach Anspruch 8 hat es ermöglicht, mit Codes zu arbeiten, die wie bei der oben erwähnten DE-A1-36 37 210 dort vorgesehen sind, wo möglichst viel Information untergebracht werden kann, und im Gegensatz zum Stand der Technik diese ohne Relativbewegung zwischen Kamera, Flasche und Beleuchtungsquelle zu lesen. Es liegt auf der Hand, dass eine Codezeichenkette am Flaschenboden weniger Information oder Information mit weniger Auflösung aufnehmen kann als eine Codezeichenkette, die dort vorgesehen ist, wo der Flaschenumfang fast am grössten ist. Bislang ist es offenbar für unmöglich gehalten worden, einen in diesem Flaschenbereich oberhalb des Flaschenbodens vorgesehenen Code anders als von aussen optisch zu lesen. Der damit verbundene grosse Zeitaufwand musste im Stand der Technik offenbar in Kauf genommen werden.

In der Ausgestaltung der Erfindung nach Anspruch 9 wird eine "Verschmierung" in dem aufgenommenen Einzelbild mit Sicherheit verhindert.

In der Ausgestaltung der Erfindung nach Anspruch 10 kann die Momentaufnahme ohne "Verschmierung" auf noch einfachere Weise gemacht werden, d.h. ohne Blitzlicht oder besonders kurze Belichtungszeit, weil mit einer Relativdrehgeschwindigkeit von null zwischen Kamera, Flasche und Beleuchtungsquelle gearbeitet wird.

Ein Ausführungsbeispiel der Erfindung wird im folgenden unter Bezugnahme auf die Zeichnungen näher beschrieben. Es zeigt

Fig. 1     eine Flascheninspektionsmaschine, bei der das Verfahren nach der Erfindung angewendet wird,

Fig. 2     einen Code, der trotz grossen Informationsgehalt durch das Verfahren nach der Erfindung sicher lesbar ist,

Fig. 3     in zwei Ansichten eine Momentaufnahme einer neuen bzw. einer alten lichtdurchlässigen Flasche mit ringförmiger Kette von Codezeichen,

Fig. 4     in mehreren schematischen Teildarstellungen die praktische Anwendung der Histogrammtechnik bei dem Verfahren nach der Erfindung.

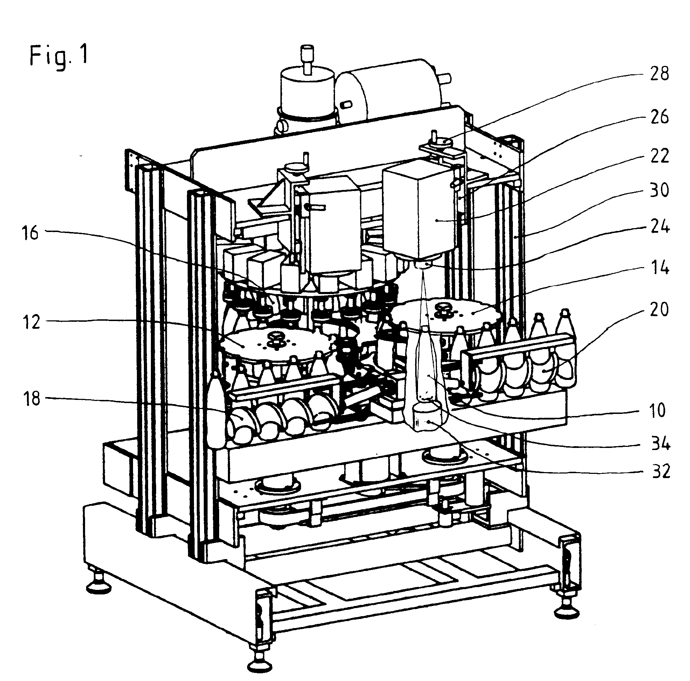

Fig. 1 zeigt eine perspektivische Gesamtansicht einer Inspektionsmaschine für PET-Flaschen, von denen lediglich eine Flasche 10 dargestellt ist. Die Maschine hat ein Einlaufkarussell 12 und ein Auslaufkarussell 14 mit jeweils zwölf Stationen zur Aufnahme von zwölf Flaschen 10. Jedes Karussell besteht aus zwei Sternscheiben. Die oberen Sternscheiben zentrieren die Flaschen 10 im Halsbereich. Zwischen den Karussells 12 und 14 befindet sich ein Hauptkarussell 16, das sechzehn Stationen aufweist. Jede Station des Hauptkarussells 16 ist mit einer kompletten Prüfeinheit für Volumen- und Leckagemessung, Höhenmessung, Geradheitsmessung, Mündungsschräglagemessung und Restlaugenkontrolle ausgerüstet, die hier nicht näher beschrieben werden. Die Flaschen 10 werden durch eine Einlaufschnecke 18 dem Einlaufkarussell 12 zugeführt. Auslaufseitig werden die Flaschen 10 mittels einer Auslaufschnecke 20 wieder aus der Maschine geführt.

Ueber dem Auslaufkarussell 14 ist eine Kamerabox 22 für die Codelesung angeordnet. Die Kamerabox 22 enthält eine Kamera 24, von der lediglich das Objektiv sichtbar ist. Die Kamerabox 22 ist an einem Schlitten 26 befestigt, der zum Fokussieren der Kamera mittels eines Handrads 28 an einem Maschinenständer 30 höhenverstellbar ist. Gegenüber der Kamera 24 ist eine Beleuchtungsquelle 32 angeordnet, mittels welcher der Boden der Flasche, die sich zwischen Beleuchtungsquelle und Kamera befindet, gleichmässig ausgeleuchtet wird. Die Kamera 24 ist vorzugsweise eine hochauflösende CCD-Kamera wie z.B. der Typ 1300 von Fairchild mit einem speziellen Hochgeschwindigkeits-Bildaufnahmemodul (nicht dargestellt). Die Kamera 24 wird so auf den unteren Bereich der Flasche 10 fokussiert, dass eine Codezeichenkette 34, die an der Aussenwand der Flasche in dem Bereich zwischen dem Flaschenboden und der Höhe, wo der Flaschenumfang am grössten ist, aufgebracht ist, vom Inneren der Flasche aus mit aufgenommen wird. Wenn die Flasche 10 durch das Auslaufkarussell 14 mit ihrer Längsachse in die Verbindungslinie zwischen der Kamera 24 und der Beleuchtungsquelle 32 bewegt worden ist, nimmt die Kamera 24 ein Bild von dem Flaschenboden einschliesslich des benachbarten unteren Bereiches der Flaschenseitenwand als Momentaufnahme auf.

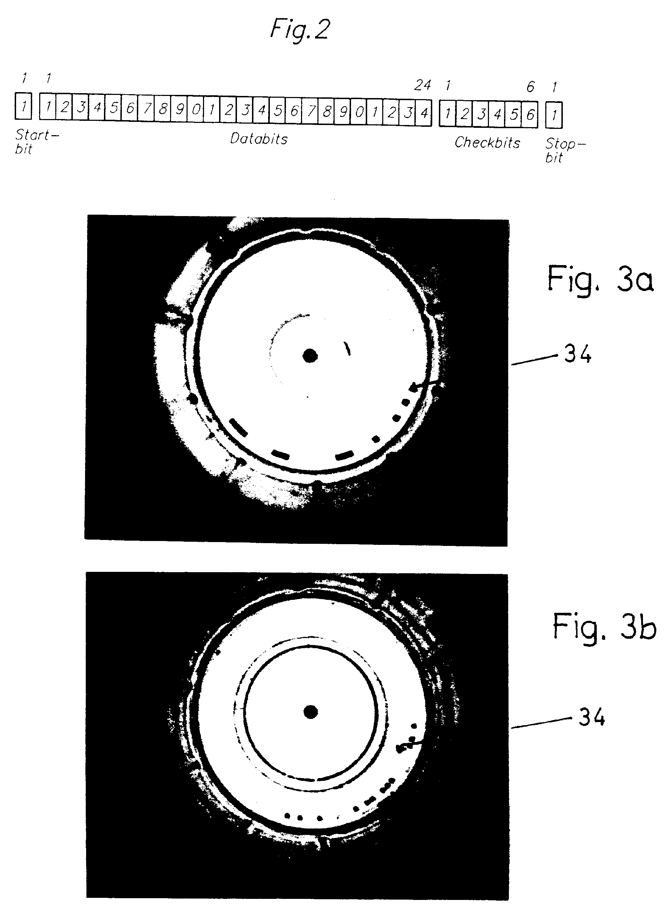

Fig. 3a zeigt eine solche Momentaufnahme von einer neuen weissen Flasche. Fig. 3b zeigt eine solche Momentaufnahme von einer gebrauchten weissen Flasche. Deutlich ist in beiden Bildern jeweils die Codezeichenkette 34 zu erkennen, die aus einem binären Balkencode besteht, dessen Aufbau in Fig. 2 gezeigt ist. Es handelt sich um einen mittels Hammingabstand gesicherten Balkencode, der in dem gezeigten Beispiel aus achtundzwanzig Bits besteht, und zwar einem Startbit und einem Stopbit, sechs Prüf- oder Checkbits und zwanzig Daten- oder Databits. Die Datenbits werden, wie eingangs bereits erläutert, in drei Felder für Datum, Produktionslinie, Flaschentyp sowie in ein Reservefeld aufgeteilt. Die Codezeichenkette erstreckt sich in dem hier beschriebenen Ausführungsbeispiel über weniger als 180 Grad des Flaschenumfangs.

Ein wesentliches Merkmal des im folgenden näher beschriebenen Codeleseverfahrens ist, dass die Codezeichenkette 34 nicht seriell Bit für Bit, sondern als ein vollständiges Einzelbild in einer Momentaufnahme erfasst wird. "Momentaufnahme" heisst, dass mit einer kurzen Belichtungszeit eine Aufnahme gemacht wird, um ein "Verschmieren" oder Unschärfen jeglicher Art in dem aufgenommenen Einzelbild zu verhindern. Zum Aufnehmen des Bildes ist daher auch keine Relativdrehgeschwindigkeit zwischen der Kamera 24, der Flasche 10 und der Beleuchtungsquelle 32 erforderlich. Als Beleuchtungsquelle 32 dient eine Blitzlampe. Es genügt, die Drehgeschwindigkeit des Auslaufkarussells 14, d.h. den Vorschub der Flasche 10 für die Aufnahme etwas zu verlangsamen oder das Auslaufkarussell 14 gerade für die erforderliche Bildaufnahmezeit (die in der Grössenordnung eines Sekundenbruchteils liegen kann) anzuhalten. Aber auch das erübrigt sich, wenn, wie hier vorgesehen, mit einer Hochgeschwindigkeitskamera und einem Hochgeschwindigkeits-Bildaufnahmemodul gearbeitet wird. In letzterem wird das aufgenommene Bild zur weiteren Verarbeitung gespeichert. Da das aufgenommene Bild ausser der Codezeichenkette 34 auch Informationen über den gesamten unteren Flaschenbereich enthält, kann es zusätzlich zur Bodenprüfung herangezogen werden.

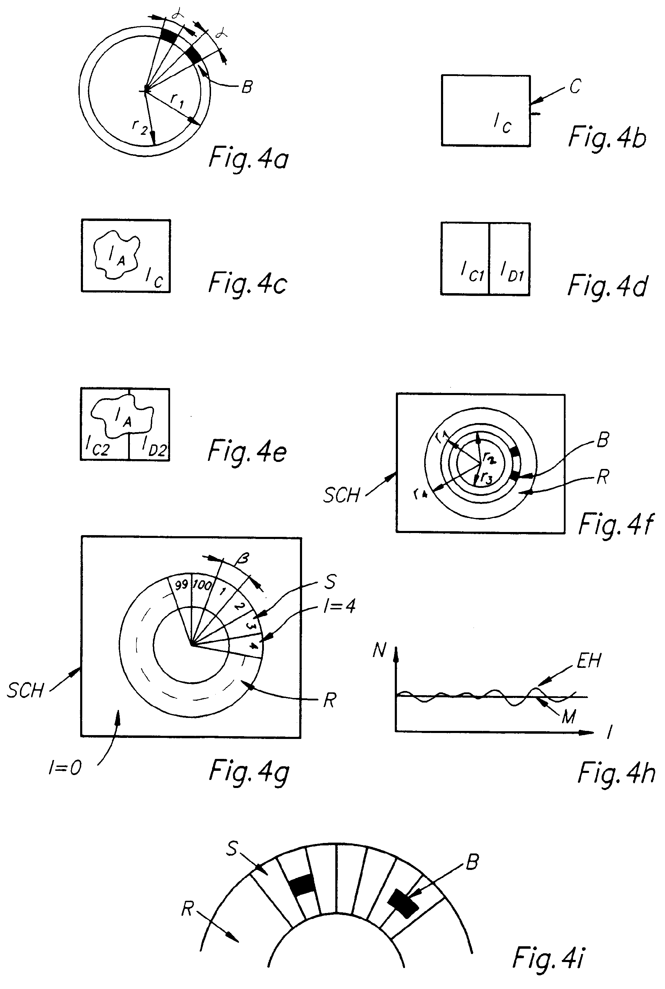

Unter Bezugnahme auf Fig. 4 wird nun die Bildauswertung näher beschrieben, deren Zweck es ist, die Information aus dem Code zu decodieren, der in dem gespeicherten Bild enthalten ist.

Gemäss Fig. 4a ist der Code als eine Kette von Zeichen oder Balken aus jeweils einem Bit B definiert. Jedes Bit B oder jeder Balken ist der Bereich, der zwischen zwei Radien $r_1$, $r_2$ und einem Winkel $\alpha$ gebildet ist. Die Bits B können um irgendeinen Winkel voneinander entfernt sein. Das erste Bit in der Kette ist das Startbit, das letzte Bit ist das Stopbit. Im hier beschriebenen Fall, bei dem der Code nach Fig. 2 benutzt wird, besteht die Codezeichenkette 34 aus achtundzwanzig Bits.

Um die Grösse der Fläche eines Bits B zu bestimmen, wird zunächst das Histogramm eines bestimmten Umgebungsbereiches berechnet. Zur Erläuterung sei angegeben, dass unter einem Histogramm allgemein eine graphische Darstellung der beobachteten Häufigkeitsverteilung einer reellwertigen Zufallsvariablen verstanden wird. Der Wertebereich der Variablen wird auf einer Abszisse repräsentiert und dort in Intervalle unterteilt. Jedes Intervall wird als untere Seite eines Rechtecks genommen, dessen Fläche zur beobachteten Häufigkeit von Werten innerhalb des entsprechenden Intervalls proportional ist. In dem vorliegenden speziellen Fall wird diese Fläche als proportional zur Intensität betrachtet.

Zuerst wird der Bereich definiert, der ein Bit B umgeben wird. Dieser Bereich kann ein vollständiges Bild C sein, das durch eine vorbestimmte Intensität $I_C$ gekennzeichnet ist, Fig. 4b.

Die Berechnung des Histogramms dieses Bildes C wird einen konstanten Wert $N_{C1}$ ergeben, der gleich der Grösse der Fläche des Bildes C ist. In dem in Fig. 4b dargestellten vereinfachten Fall ist das Bild C ein Rechteck. Nun wird ein Fleck beliebiger Form zu dem Hintergrund, d.h. zu dem Bild C addiert, Fig. 4c. Der Fleck wird mit einer Intensität $I_A$ gekennzeichnet, die nicht gleich $I_C$ ist. Da das Histogramm des Bildes C bereits bekannt ist, wird es wieder eine kleinere Fläche $N_{C2}$ für die Umgebung geben, Fig. 4c. Für die Fläche $N_A$ des Flecks würde sich also ergeben

$$N_A = N_{C1} - N_{C2}$$

Etwas komplexer ist der Fall, wenn die Umgebung nicht homogen ist, sondern beispielsweise zwei verschiedene Intensitäten $I_{C1}$ und $I_{D1}$ aufweist, Fig. 4d.

Die Berechnung des Histogramms dieses Hintergrundes ergibt $N_{C1}$ und $N_{D1}$, d.h. die Fläche für den linken und den rechten Teil des Hintergrundes. Nun wird wieder ein Fleck addiert, Fig. 4e. Die Intensität dieses Flecks ist $I_A = I_C = I_D$. Das Histogramm des Bildes ergibt wieder $N_{C2}$, $N_{D2}$, die Flächen des Hintergrundes. Für die Fläche des Flecks ergibt sich

$$N_A = (N_{C1} - N_{C2}) + (N_{D1} - N_{D2}).$$

Dasselbe Verfahren kann auch bei einem noch höheren Grad an Komplexität benutzt werden.

Um nun in der Lage zu sein, die Fläche jedes Bits B in dem Code zu berechnen, muss eine definierte Umgebungsfläche für jedes Bit in dem Code erzeugt werden. Es muss sichergestellt werden, dass die Fläche des Hintergrundes bekannt ist, bevor der Code zu dem Hintergrund addiert wird. Diese Addition des Codes zu dem Hintergrund kann eine Prozedur des Ueberlagerns von zwei Bildern sein. Der Hintergrund, der als eine Schablone SCH bezeichnet werden kann, wird in folgenden Schritten erzeugt.

Zuerst wird gemäss Fig. 4f ein Ring R mit den Radien $r_4$ und $r_3$ gezeichnet, wobei gilt $(r_4 - r_3) > (r_1 - r_2)$, wodurch die Empfindlichkeit bezüglich der Lage der Längsachse der Flasche eliminiert wird. Probleme könnten sich sonst ergeben, wenn der Mittelpunkt des Bodens der Flasche nicht mit dem Mittelpunkt des Kreises zusammenfällt, auf dem sich der Code befindet. Um also sicherzustellen, dass der Hintergrundring jedes Bit in dem Code vollständig umgibt, werden die beiden Bilder oder Ringflächen einander überlagert, Fig. 4f.

Der zweite Schritt besteht darin, den Schablonenring R in Sektoren S zu zerschneiden, jeden mit dem Winkel $\beta$, wobei gilt $\beta \leqq \alpha$. Der Sektorenwinkel $\beta$ ist also kleiner als der oder gleich dem Winkel $\alpha$ eines Bits B. In dem hier beschriebenen speziellen Beispiel gilt $\beta = \alpha = 3{,}6°$, weshalb $360°/3{,}6 = 100$ Sektoren S pro Schablonenring verfügbar sein werden, Fig. 4g.

Der nächste Schritt besteht darin, jedem Schablonensektor S eine andere Intensität zuzuordnen. Der erste Sektor kann mit der Intensität 1 gekennzeichnet werden, der zweite Sektor mit der Intensität 2, usw., und der Rest der Schablone, d.h. deren Bereich ausserhalb des Ringes R kann mit der Intensität I = O gekennzeichnet werden.

Nun wird das Histogramm der Schablone genommen. Das liefert die Fläche jedes Schablonensektors. Da jedem eine andere Intensität I zugeordnet ist, wird die Anzahl der Pixels für jede Intensität die Fläche N des Sektors S liefern. Rein mathematisch betrachtet wird ein Mittelwert M der Histogramm-Darstellung geliefert werden, Fig. 4h, in der die Fläche N über der Intensität I aufgetragen ist und das echte Histogramm EH die unregelmässige Linie ist, für die M der Mittelwert ist. Mit jedem Pixel endlicher Fläche ergeben sich Schwankungen über dem Mittelwert-Histogramm, wie sie in Fig. 4h gezeigt sind. Diese Schwankungen bereiten keine Schwierigkeiten, da jede Sektorfläche genau bekannt ist. Diese Prozedur wird nur einmal durchgeführt und dann im Speicher des verwendeten Computers festgehalten.

Nun kann durch Addieren des Codes zu der Schablone SCH (dem Hintergrund) jedes Bit 36 des Codes in einem Sektor des Schablonenringes R liegen, oder, was am wahrscheinlichsten ist, einem Teil von zwei benachbarten Sektoren überlagert sein. Selbst wenn ein Bit B drei oder mehr als drei Sektoren überlagert wäre, würde das keine Schwierigkeiten bereiten, da jeder Sektor durch seine eigene Intensität gekennzeichnet ist, Fig.4i.

Es muss sorgfältig darauf geachtet werden, auch die Bits selbst zu kennzeichnen. Die Bit-Kennzeichen sollten dabei ausserhalb des Bereiches der Schablonensektor-Kennzeichen liegen. Eine der Möglichkeiten zum Ueberlagern der beiden Bilder besteht darin, eine einfache Summation der beiden Bilder vorzunehmen, Pixel für Pixel. Wenn die höchste Intensität, die einem Sektor S der Schablone zugeordnet ist, der Wert i wäre, dann ist die niedrigste Intensität, die einem Bit zugeordnet werden kann, i + 1, und dem Rest des Bildes ist die Intensität null zugeordnet. Nach der Summierung reicht der Rang der Intensität der Bits von i + 1 bis 2i + 1, was ausserhalb des Bereiches der Intensität der Schablonensektoren liegt, so dass bei der Ueberlagerung keine Bits verlorengehen. Durch Verwenden des Histogramms des überlagerten Bildes wird eine direkte Abbildung des Codes auf dem Bild erzielt, d.h. durch Vergleichen des Histogramms mit dem im Speicher festgehaltenen Schablonenhistogramm. Ein Bit wird aufgefunden, indem festgelegt wird, dass, wenn die Fläche eines Schablonensektors oder von zwei benachbarten Schablonensektoren in der Grössenordnung eines Bits abnimmt, so bedeutet das, dass sich in dieser Position oder bei diesen Koordinaten ein Bit befindet. Da die Codezeichenkette ebenfalls eine ringförmige Fläche bildet, hat jedes Bit ebenfalls die Form eines Sektors. Bei dem Decodieren der Codezeichenkette lassen sich so deren Start- und Stopbit auffinden. Der Sektor, wo die Intensität zum ersten Mal in der Codezeichenkette reduziert wird, enthält das Startbit, und der Sektor, wo die Intensität der Codezeichenkette zum letzten Mal reduziert wird, enthält das Stopbit.

Auf folgende Weise lassen sich ohne einen zeitraubenden Algorithmus das Start- und das Stopbit des Codes lokalisieren. Die Codelänge beträgt in dem hier beschriebenen Beispiel Y = 28 Bits. Die Schablonensektoren werden in aufsteigender Reihenfolge geprüft, um einen Schablonensektor X zu finden, der ein Bit enthält, und, wenn das der Fall ist, wird der von dem Schablonensektor X um (X-1) = 27 Schablonensektoren entfernte Schablonensektor geprüft, um festzustellen, ob er ein Bit enthält, und, wenn ja, wird das aufgefundene Bitpaar als Start- und Stopbit verwendet, wenn nein, werden die beiden vorgenannten Prüfschritte bis zum Auffinden eines Bitpaares wiederholt, deren Bits um siebenundzwanzig Bits voneinander getrennt ist. Wenn sich auf diese Weise kein derartiges Bitpaar finden liesse, so würde das bedeuten, dass ein Fehler vorliegt, also z.B. die Flasche nicht sauber oder zu sehr verkratzt ist, der Code nicht richtig gelesen worden ist, od.dgl.

**Patentansprüche**

1. Verfahren zum Lesen einer auf einer lichtdurchlässigen Flasche (10) im unteren Bereich derselben ringförmig angeordneten Kette von Codezeichen (34), durch Richten einer Kamera (24) durch den Flaschenhals hindurch auf den unteren Flaschenbereich, Beleuchten des unteren Flaschenbereiches von aussen (32) und Speichern und Decodieren der mit der Kamera aufgenommenen Codezeichenkette, **dadurch gekennzeichnet**, dass eine Momentaufnahme des unteren Flaschenbereiches mit der gesamten Codezeichenkette gemacht und zum späteren Decodieren derselben als ein Bild gespeichert wird.

2. Verfahren nach Anspruch 1, dadurch gekennzeichnet, dass die Codezeichenkette durch eine Ringfläche gebildet wird, wobei jedes Codezeichen in Form eines balkenförmigen Sektors ein einzelnes Bit darstellt.

3. Verfahren nach Anspruch 2, dadurch gekennzeichnet, dass zum Decodieren der Codezeichenkette die gespeicherte Momentaufnahme in Histogrammtechnik verarbeitet wird.

4. Verfahren nach Anspruch 3, gekennzeichnet durch folgende Schritte:
   a) Wählen einer Schablone in Form einer Ringfläche, die innen und aussen grösser ist als die von der Codezeichenkette gebildete Ringfläche;
   b) Unterteilen der Ringfläche der Schablone in eine Anzahl Y von Schablonensektoren, deren Umfangsbreite jeweils kleiner als die oder gleich der eines Codezeichensektors ist;
   c) Kennzeichnen jedes Schablonensektors mit einer anderen Intensität in Form einer Anzahl von Pixeln durch Berechnen eines Histogramms, aus dem die Fläche jedes Schablonensektors ermittelt wird, die zu dessen Intensität proportional ist;
   d) Ueberlagern der Ringfläche der Schablone und der Ringfläche der Codezeichenkette;
   e) Feststellen, in welchem Schablonensektor oder welcher Gruppe benachbarter Schablonensektoren durch die Ueberlagerung die Intensität oder Fläche um die eines Codezeichens reduziert worden ist;
   f) Darstellen der Schablonensektoren reduzierter Intensität als abgelesene Codezeichenkette; und
   g) Decodieren der Codezeichenkette ab dem Sektor, wo die Intensität zum ersten Mal reduziert wurde (Startbit), bis zu dem Sektor, wo die Intensität zum letzten Mal reduziert wurde (Stopbit).

5. Verfahren nach Anspruch 4, gekennzeichnet durch folgende Schritte zum Bestimmen des Anfangs und Endes der im Schritt f) ermittelten und im Schritt g) decodierten Codezeichenkette:
   f.1) Prüfen der Schablonensektoren in aufsteigender Reihenfolge, um einen Schablonensektor X zu finden, der ein Bit enthält, und, wenn das der Fall ist,

f.2) Prüfen des von dem Schablonensektor X um (Y-1) Schablonensektoren entfernten Schablonensektors, ob er ein Bit enthält, und, wenn ja, Verwenden des aufgefundenen Bitpaares als Start- und Stopbit, wenn nein, Wiederholen der Schritte f.1) und f.2) bis zum Auffinden eines Bitpaares.

6. Verfahren nach Anspruch 5, dadurch gekennzeichnet, dass als Code ein mittels Hammingabstand gesicherte Balkencode aus achtundzwanzig oder zweiunddreissig Bits verwendet wird, der zwischen dem Start- und dem Stopbit sechs Prüfbits und im übrigen Datenbits enthält.

7. Verfahren nach Anspruch 6, dadurch gekennzeichnet, dass die Datenbits in drei Felder für Datum, Produktionslinie und Flaschentyp und in ein Reservefeld aufgeteilt werden.

8. Verfahren nach einem der Ansprüche 1 bis 7, dadurch gekennzeichnet, dass die Kamera so auf den inneren unteren Bereich der Flasche fokussiert wird, dass eine Codezeichenkette, die an der Aussenwand der Flasche in dem Bereich zwischen dem Flaschenboden und der Höhe, wo der Flaschenumfang am grössten ist, aufgebracht worden ist, mit aufgenommen wird.

9. Verfahren nach einem der Ansprüche 1 bis 8, dadurch gekennzeichnet, dass die Momentaufnahme mit kurzer Belichtungszeit mittels Blitzlicht gemacht wird.

10. Verfahren nach einem der Ansprüche 1 bis 8, dadurch gekennzeichnet, dass die Momentaufnahme bei einer Relativdrehgeschwindigkeit von null zwischen Kamera, Flasche und Beleuchtungsquelle gemacht wird.

## Claims

1. A procedure for reading a series of code markings (34) disposed in the form of a ring on a transparent bottle (10) in the lower region of the same by directing a camera (24) through the bottle neck on to the lower bottle region, illuminating the lower bottle region from the outside (32) and storing and decoding the code marking series recorded by the camera, characterised in that a snapshot is taken of the lower bottle region with the total code marking series and is stored as an image for the subsequent decoding of the same.

2. A procedure according to claim 1, characterised in that the code marking series is formed by an annular area, wherein each code marking in the form of a bar-shaped sector constitutes a single bit.

3. A procedure according to claim 2, characterised in that the stored snapshot is processed using a histogram technique in order to decode the code marking series.

4. A procedure according to claim 3, characterised by the following steps:
   a) selecting a template in the form of an annular area, which is larger inside and outside than the annular area formed by the code marking series;
   b) subdividing the annular area of the template into a number Y of template sectors, the peripheral width of each of which is less than or equal to that of a code marking sector;
   c) characterising each template sector by a different intensity in the form of a number of pixels by calculating a histogram from which the area of each template sector is determined, which is proportional to its intensity;
   d) superimposing the annular area of the template and the annular area of the code marking series;
   e) determining in which template sector or in which group of adjacent template sectors the intensity or area has been reduced by one code marking due to the superposition;
   f) representing the template sectors of reduced intensity as a code marking series which has been read out; and
   g) decoding the code marking series from the sector where the intensity was reduced for the first time (start bit) to the sector where the intensity was reduced for the last time (stop bit).

5. A procedure according to claim 4, characterised by the following steps for determining the start and end of the code marking series determined in step f) and decoded in step g):
   f. 1) checking the template sectors in increasing order, in order to find a template sector X which contains a bit, and when this is the case

f.2) checking whether the template sector at a distance of (Y-1) template sectors from template sector X contains a bit, and if affirmative using the found bit pair as the start and stop bit, and if negative repeating steps f.1) and f.2) until a bit pair is found.

6. A procedure according to claim 5, characterised in that a bar code comprising twenty-eight or thirty-two bits and secured by means of a hamming distance is used as the code, which bar code contains six check bits, balance data bits between the start and the stop bit.

7. A procedure according to claim 6, characterised in that the data bits are subdivided into three fields for date, production line and bottle type, and into a reserve field.

8. A procedure according to any one of claims 1 to 7, characterised in that the camera is focused on to the internal lower region of the bottle so that a code marking series is also recorded which is applied to the outside wall of the bottle in the region between the bottle base and the height at which the bottle periphery is largest.

9. A procedure according to any one of claims 1 to 8, characterised in that the snapshot is taken with a short exposure time by means of flashlight.

10. A procedure according to any one of claims 1 to 8, characterised in that the snapshot is taken at a relative rotational speed of zero between the camera, bottle and illumination source.

## Revendications

1. Procédé permettant de lire une chaîne de signes de codage (34), disposée en anneau sur une bouteille (10) laissant passer la lumière, dans la partie inférieure de cette bouteille, en orientant l'axe d'un appareil photographique (24) par le goulot de la bouteille et vers la partie inférieure de cette dernière, en éclairant de l'extérieur (32) cette partie inférieure de la bouteille et en rangeant en mémoire et décodant la chaîne de signes de codage dont un cliché est pris au moyen de l'appareil photographique, caractérisé en ce qu'un instantané de la partie inférieure de la bouteille comportant l'ensemble de la chaîne de signes de codage est exécuté et est rangé en mémoire sous forme d'une image en vue du décodage ultérieur de cette chaîne de signes de codage.

2. Procédé selon la revendication 1, caractérisé en ce que la chaîne de signes de codage est en forme de surface annulaire et en ce que chaque signe de codage, se présentant comme un secteur en forme de barre, représente un bit individuel.

3. Procédé selon la revendication 2, caractérisé en ce qu'en vue du décodage de la chaîne de signes de codage, l'instantané mis en mémoire est traité par la technique de l'histogramme.

4. Procédé selon la revendication 3, caractérisé par les opérations suivantes consistant:
   a) à choisir un gabarit en forme de surface annulaire qui, intérieurement et extérieurement, est plus grand que la surface annulaire formée par la chaîne de signes de codage,
   b) à diviser la surface annulaire du gabarit en un nombre Y de secteurs de gabarit, la largeur circonférentielle de chacun de ces secteurs étant inférieure ou égale à celle d'un secteur de signe de codage,
   c) à caractériser chaque secteur de gabarit par une autre intensité, sous forme d'un certain nombre de pixels, en calculant un histogramme à partir duquel est déterminée la surface de chaque secteur de gabarit, laquelle est proportionnelle à l'intensité de ce secteur,
   d) à superposer la surface annulaire du gabarit et la surface annulaire de la chaîne de signes de codage,
   e) à déterminer le secteur de gabarit, ou le groupe de secteurs de gabarit voisins, dans lequel, du fait de la superposition, l'intensité ou la surface a été réduite de celle d'un signe de codage,
   f) à présenter les secteurs de gabarit d'intensité réduite comme constituant la chaîne de signes de codage lue, et
   g) à décoder la chaîne de signes de codage, du secteur auquel l'intensité a été réduite pour la première fois (bit initial) au secteur auquel l'intensité a été réduite pour la dernière fois (bit final).

5. Procédé selon la revendication 4, caractérisé par les opérations suivantes qui servent à déterminer le début et la fin de la chaîne de signes de codage déterminée à l'opération f) et décodée à l'opération g) et qui consistent :

f.1) à contrôler les secteurs de gabarit dans l'ordre croissant, afin de trouver un secteur de gabarit X qui contient un bit et, lorsque tel est le cas,

f.2) à contrôler le secteur de gabarit séparé du secteur de gabarit X par (Y-1) secteurs de gabarit, afin d'établir s'il contient un bit et, si la réponse est positive, à utiliser la paire de bits trouvée en tant que bit initial et bit final, mais, si la réponse est négative, à répéter les opérations f.1) et f.2) jusqu'à ce que soit trouvée une paire de bits.

6. Procédé selon la revendication 5, caractérisé en ce qu'en tant que code, on utilise un code barres, protégé au moyen d'une distance de Hamming et formé de 28 ou 32 bits, qui, entre le bit initial et le bit final, contient 6 bits de contrôle et, pour le reste, des bits de données.

7. Procédé selon la revendication 6, caractérisé en ce que les bits de données sont divisés en trois champs, de date, de ligne de production et de type de bouteille, et un champ de réserve.

8. Procédé selon l'une des revendications 1 à 7, caractérisé en ce que l'appareil photographique fait le point sur la partie inférieure intérieure de la bouteille, d'une façon telle que le cliché prenne en même temps une chaîne de signes de codage qui a été apposée sur la paroi extérieure de la bouteille dans la zone située entre le fond de la bouteille et le niveau auquel la circonférence de la bouteille est la plus grande.

9. Procédé selon l'une des revendications 1 à 8, caractérisé en ce que l'instantané est exécuté, avec un court temps de pause, au moyen d'un flash.

10. Procédé selon l'une des revendications 1 à 8, caractérisé en ce que l'instantané est exécuté à une vitesse relative nulle entre l'appareil photographique, la bouteille et la source de lumière.

Fig. 1

28
26
22
30
24
14
20
10
34
32

16
12
18

EP 0 465 775 B1

*Fig.2*

Start-bit    Databits    Checkbits    Stop-bit

Fig. 3a

— 34

Fig. 3b

— 34

12

Fig. 4a

Fig. 4b

Fig. 4c

Fig. 4d

Fig. 4e

Fig. 4f

Fig. 4g

Fig. 4h

Fig. 4i